# EUROPÄISCHE PATENTSCHRIFT

(11) **EP 3 013 562 B1**
(45) Veröffentlichungstag und Bekanntmachung des Hinweises auf die Patenterteilung: **22.04.2020**
(21) Anmeldenummer: 14738427.5
(22) Anmeldetag: 24.06.2014
(51) Int. Cl.: B29C 65/08

(54) **VERFAHREN ZUM STOFFSCHLÜSSIGEN VERBINDEN VON FASERVERSTÄRKTEN BAUTEILEN**
METHOD FOR MATERIALLY BONDED CONNECTION OF FIBRE-REINFORCED COMPONENTS
PROCÉDÉ D'ASSEMBLAGE PAR LIAISON DE MATIÈRE DE PIÈCES RENFORCÉES DE FIBRES

(30) Priorität: 28.06.2013 DE 102013212763
(43) Veröffentlichungstag der Anmeldung: 04.05.2016
(73) Patentinhaber: Bayerische Motoren Werke Aktiengesellschaft, 80809 München (DE)
(72) Erfinder: BRAUCH, Michael, 85598 Baldham (DE); MANTEI, Ingo, 80804 München (DE)
(86) Internationale Anmeldenummer: PCT/EP2014/063272
(87) Internationale Veröffentlichungsnummer: WO 2014/206980

(56) Entgegenhaltungen:
- EP-A1- 1 241 100
- WO-A2-2007/123943
- DE-A1-102008 059 142
- FR-A1- 2 887 800
- JP-A- 2005 052 983
- US-A1- 2009 199 942

## Beschreibung

Die vorliegende Erfindung betrifft ein Verfahren zum stoffschlüssigen Verbinden von faserverstärkten Bauteilen.

Zum Fügen von thermoplastischen Kunststoffen wird im Stand der Technik das Ultraschall-Schweißen beschrieben. Dabei werden die Werkstücke lokal erwärmt, bis sie sich in einen zähflüssigen Zustand befinden. Die Materialien der einzelnen Werkstücke fließen an der Fügestelle ineinander und verbinden die Werkstücke stoffschlüssig. Die Wärmeenergie, die zum Fügen der Werkstücke benötigt wird, wird durch mechanische Schwingungen erzeugt. Diese Schwingungen liegen im Bereich von Ultraschallfrequenzen.

Ein Beispiel einer solchen Sonotrode für eine Ultraschall-Schweißanlage ist aus der europäischen Patentschrift EP 1 250 996 B1 bekannt. Die aus dem Stand der Technik bekannten Sonotroden-Formen berücksichtigen nicht die speziellen Anforderungen von faserverstärkten Kunststoffbauteilen. Beim klassischen Fügen mittels Ultraschall-Punktschweißen mit Dorn-Sonotrode werden die zu fügenden Bauteile geschwächt, d.h. in ihren Dicken reduziert. In manchen Fällen bleibt sogar ein Loch in einem der zu fügenden Bauteile zurück, wodurch sich die erreichbare Verbindungsfestigkeit reduziert.

WO2007/123943 zeigt ein weiterer Stand der Technik nach dem Oberbegriff von Anspruch 1.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, ein Verfahren zum Fügen von faserverstärkten Kunststoffbauteilen anzugeben, mit dem bzw. der besonders hohe mechanische Eigenschaften in der Verbindungsstelle erzeugt werden.

Diese Aufgabe wird durch ein Verfahren mit den Merkmalen des unabhängigen Anspruchs 1 gelöst. Die abhängigen Ansprüche stellen vorteilhafte Ausführungsformen der vorliegenden Erfindung dar.

Darüber hinaus weist die Vorrichtung eine Matrize, zur Aufnahme der zu verbindenden Bauteile auf, wobei die Matrize eine der Wirkfläche der Snonotrode zugewandte eigene Wirkoberfläche aufweist. Weiterhin kann die Wirkfläche der Sonotrode und die Wirkoberfläche der Matrize jeweils eine formgebende Wirkfläche sein, die mit einem der zu verbindenden Bauteile zumindest abschnittsweise formbar ist. Dadurch zeichnet sich beim Verschweißen der Bauteile die Wirkfläche des der Sonotrode und die Wirkoberfläche der Matrize jeweils in der Oberfläche des Bauteils ab, mit dem die Sonotrode bzw. die Matrize in berührenden Kontakt kommt. Dies bietet den Vorteil, dass die vorgeschlagenen Sonotrodenformen bzw. die Matrize wie Gegenwerkzeuge fungieren, mit denen eine Verbindung ähnlich eines Clinchpunktes wie in der Metallfügetechnik bekannt, erzeugbar ist.

Darüber hinaus kann die Sonotrode als eine Ultraschall-Sonotrode ausgebildet sein. Zusätzlich oder alternativ kann die Form der Wirkfläche der Sonotrode und die Form der Wirkoberfläche der Matrize komplementär ausgebildet sein. Wenn beispielsweise die Wirkfläche der Sonotrode konvex geformt ist, weist die Wirkoberfläche der Matrize eine konkave Form auf und umgekehrt. Dadurch werden die zu fügenden Bauteile in ihrer Dickenrichtung nicht, wie im Stand der Technik, gequetscht sondern gleichmäßig unter Beibehaltung ihrer ursprünglichen Dicke umgeformt.

Dadurch kann im Bereich der Fügestelle die mechanische Festigkeit der zu fügenden Bauteile aufrecht erhalten werden, wobei weitestgehend die Fasern geschont werden.

Darüber hinaus kann die Wirkfläche zumindest abschnittsweise konvex oder konkav gekrümmt sein und/oder eine Kombination aus konvexen und konkaven Krümmungen aufweisen. Dies bietet den Vorteil, dass besonders weiche Übergänge vom unverschweißten Material zu dem verschweißten Material in der Fügezone erzeugt werden können, durch die die Festigkeit der Fügezone weiter erhöht wird.

Darüber hinaus kann die Wirkfläche der Sonotrode einen hervorspringenden Bereich aufweisen, mit einer topfförmigen, napfförmigen, halbkugelförmigen und/oder kegelförmigen Querschnittsform aufweisen. Diese genannten Formen haben sich als besonders faserschonend herausgestellt und sind besonders gut geeignet zur Formung der Sonotrode bzw. als Negativ-Form für die Matrize.

Zusätzlich kann die Wirkfläche abgerundete Kantenbereiche aufweisen.

Dieses Verfahren bietet somit den Vorteil, dass höhere Verbindungsfestigkeiten durch den zusätzlichen Formschluss in der Fügestelle erzeugt werden. Darüber hinaus werden die Verstärkungsfasern in der Fügezone geschont, wodurch sich die mechanische Festigkeit weiter verbessert.

Besonders gute Eigenschaften werden erreicht, wenn die Sonotrode zum Fügen der Bauteile in einem Ultraschall-Frequenzbereich betrieben wird.

Darüber hinaus kann das stoffschlüssige Verbinden und das Umformen der Bauteile simultan erfolgen.

In Sinne dieser Erfindung sind faserverstärkte Bauteile, Kunststoffbauteile mit einer Matrix, insbesondere einer Matrix aus thermoplastischem Kunststoff, in der zur Verstärkung Fasern eingebettet sind. Diese Fasern können als Glas-, Kohlenstoff-, Aramid- und/oder Basaltfasern ausgebildet sein.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.
- Fig. 1: eine Ausgangssituation zum Fügen zweier faserverstärkter Kunststoffbauteile,
- Fig. 2: eine Endposition, bei der die zu fügenden Bauteile umgeformt sind und
- Fig. 3: eine alternative Ausführungsform in der Endposition des Verfahrens.

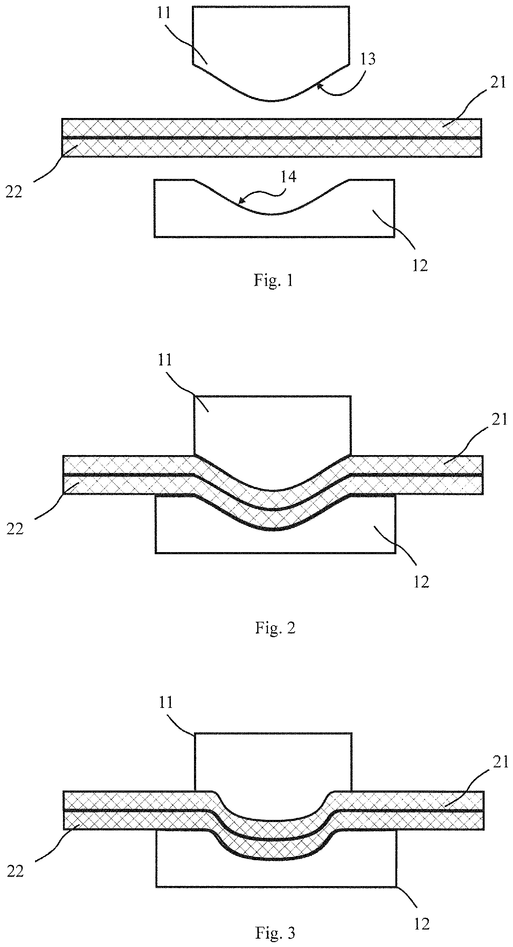

Figur 1 zeigt eine Sonotrode 11 mit einer Wirkfläche 13 und eine Matrize 12 mit einer Wirkoberfläche 14. Die Wirkfläche 13 und die Wirkoberfläche 14 sind einander zugewandt und liegen einander gegenüber. Die Form der Wirkfläche 13 ist konvex geformt und damit komplementär zu der der Wirkoberfläche 14, die konkav gebogen ist. Die Sonotrode 11 und die Matrize 12 können relativ zueinander bewegt werden. Dabei kann beide Werkzeughälften 11, 12 beweglich ausgebildet sein. Alternativ dazu kann auch nur die Sonotrode auf die Matrize oder nur die Matrize auf die Sonotrode zubewegt werden. In diesen Fällen ist dann die unbewegliche Werkzeughälfte fest und die bewegliche verschiebbar ausgebildet.

Die Sonotrode 11 und die Matrize 12 sind Bestandteile einer weiter nicht dargestellten Schweißanlage. Zwischen der Sonotrode 11 und der Matrize 12 sind die zu fügenden Bauteile 21 und 22 dargestellt.

Zum Verschweißen der Bauteile 21, 22 wird die Schweißanlage in eine Schweißposition überführt, wobei die Sonotrode 11 und die Matrize 12 aufeinander zubewegt, so dass die zu fügenden Bauteile 21, 22 dazwischen geklemmt bzw. umgeformt werden. In dieser Position wird die Sonotrode 11 in UltraschallSchwingungen versetzt, wobei die Sonotrode Bewegungen auf die Matrize zu und von der Matrize weg durchführen kann. Solche Bewegungen entsprechen in Figur 2 einer oszillierenden Auf- und Abwärtsbewegung und stehen im Wesentlichen senkrecht zur Trennebene der Werkzeughälften 11, 12. Alternativ dazu kann die Sonotrode 11 auch seitliche Bewegungen durchführen, um mittels Ultraschall die beiden Bauteile 21 und 22 reibschweißend zu verbinden. Dabei oszilliert die Sonotrode 11 in Wesentlichen in der Trennebene oder in einer zur Trennebene parallelen Ebene der Werkzeughälften 11, 12. In den Figuren 1, 2 und 3 ist die Sonotrode 11 als obere Werkzeughälfte und die Matrize 12 als untere Werkzeughälfte dargestellt. Erfindungsgemäß können die Position der Matrize 12 und die Position der Sonotrode 11 vertauscht werden.

In Figur 3 ist eine alternative Ausführungsform der Fügevorrichtung dargestellt. Wie daraus ersichtlich weist die Wirkfläche 13 der Sonotrode 11 und die Wirkoberfläche 14 der Matrize 12 eine Kombination aus konvexen und konkaven Krümmungen auf. Mittig in der Wirkfläche 13 der Sonotrode 11 ist ein napfförmig hervorspringender Bereich 15 dargestellt. Dadurch kann an der Fügestelle der beiden Bauteile 21, 22 ein besonders guter Hinterschnitt erzeugt werden, da der hervorspringende Bereich 15 das obere Bauteil 21 tiefer in das unter Bauteil 22 drückt. Die Übergänge von den ebenen Bereichen der Wirkfläche 13 zu dem hervorspringenden Bereich 15 sind abgerundet, damit keine Stetigkeitssprünge an Kanten entstehen. Kanten würden den Verlauf der Verstärkungsfasern entsprechend verändern und den Kraftfluss reduzieren. Ferner besteht die Gefahr, dass durch Kanten die Fasern beschädigt werden.

## Patentansprüche

1. Verfahren zum Fügen von faserverstärkten Kunststoffbauteilen mit den Schritten:
- Anordnen der zu fügenden Bauteile (21, 22) zwischen einer Sonotrode (11) und einer Matrize (12),
- stoffschlüssiges Verbinden der zu fügenden Bauteile durch Beaufschlagen der Bauteile (11, 12) mit Temperatur,
- Umformen der zu fügenden Bauteile (21, 22) in einem Kontaktbereich, in dem die zu fügenden Bauteile mit der Sonotrode (11) auf die Matrize (12) gepresst werden,
wobei
sich die Form der Wirkfläche (13) der Sonotrode (11) in einer der Bauteiloberflächen abbildet, **dadurch gekennzeichnet, dass** die zu fügenden Bauteile (21, 22) unter Beibehaltung ihrer ursprünglichen Dicke umgeformt werden.

2. Verfahren nach Anspruch 1, **dadurch gekennzeichnet, dass** die Sonotrode (11) eine Ultraschallsonotrode ist.

3. Verfahren nach einem der Ansprüche 1 oder 2, **dadurch gekennzeichnet, dass** das stoffschlüssige Verbinden und das Umformen der Bauteile simultan erfolgt.

## Claims

1. A method for joining fibre-reinforced plastics-material components, having the steps:
- arranging the components (21, 22) to be joined between a sonotrode (11) and a die (12),
- by a material-formed connection, connecting the components to be joined, by exposing the components (11, 12) to temperature,
- shaping the components (21, 22) to be joined in a contact region in which the components to be joined are pressed onto the die (12) with the sonotrode (11),
wherein
the form of the operative surface (13) of the sonotrode (11) is imaged in one of the component surfaces, **characterised in that** the components (21, 22) to be joined are shaped while retaining their original thickness.

2. A method according to Claim 1, **characterised in that** the sonotrode (11) is an ultrasonic sonotrode.

3. A method according to one of Claims 1 or 2, **characterised in that** the material-formed connection and the shaping of the components take place simultaneously.

## Revendications

1. Procédé d'assemblage de pièces en matériau synthétique renforcé par des fibres comprenant des étapes consistant à :
- positionner les pièces (21, 22) à assembler entre une sonotrode (11) et une matrice (12),
- relier les pièces à assembler par une liaison par la matière en soumettant ces pièces (11, 12) à une température,
- mettre en forme les pièces (21, 22) à assembler dans une zone de contact dans laquelle ces pièces à assembler sont comprimées sur la matrice (12) avec la sonotrode (11),
- la forme de la surface active (13) de la sonotrode (11) étant réalisée dans une surface d'une pièce,
**caractérisé en ce que**
les pièces (21, 22) à assembler sont mises en forme en conservant leur épaisseur initiale.

2. Procédé conforme à la revendication 1,
**caractérisé en ce que**
la sonotrode (11) est une sonotrode à ultrasons.

3. Procédé conforme à l'une des revendications 1 et 2,
**caractérisé en ce que**
la liaison par la matière et la mise en forme des pièces s'effectuent simultanément.
